# EUROPEAN PATENT SPECIFICATION

(11) **EP 3 121 490 B1**
(45) Date of publication and mention of the grant of the patent: **03.04.2019**
(21) Application number: 15177561.6
(22) Date of filing: 20.07.2015
(51) Int. Cl.: F16J 15/16, F16J 15/56, F16J 15/328

(54) **SEALING ARRANGEMENT**
DICHTUNGSANORDNUNG
DISPOSIITF DE SCELLEMENT

(43) Date of publication of application: 25.01.2017
(73) Proprietor: TRELLEBORG SEALING SOLUTIONS HELSINGØR A/S, 3000 Helsingør (DK)
(72) Inventor: Larsen, Steffen Karmark, 1127 Copenhagen K (DK); Bøgelund, Bo, 2500 Valby (DK); Andersen, Simone Thorndal, 2300 Copenhagen S (DK)
(74) Representative: Plougmann Vingtoft a/s

(56) References cited:
- EP-A1- 0 104 504
- WO-A1-2014/030506
- DE-A1-102005 035 633
- FR-A5- 2 215 859
- US-A- 4 723 782
- US-A- 5 190 440

## Description

### FIELD OF THE INVENTION

The invention relates to the field of sealing two mechanical parts, which are movable relative to each other in a rotating and/or a reciprocating movement in hydraulic or pneumatic machinery.

### BACKGROUND OF THE INVENTION

In hydraulic or pneumatic machinery with mechanical parts, which are movable relative to each other in a rotating and/or a reciprocating movement sealings are used for sealing a high pressure side from a low pressure side in the machinery. High pressure-differences can exist between the high-pressure side and the low-pressure side of the sealing, which result in correspondingly high contact forces between the sealing and the parts of the machinery to be sealed. This causes friction, which is desirable to reduce. In general, friction and contact force increase with increasing width of the contact surface in the direction of the pressure gradient, and therefore it is desirable to reduce the width of the contact surface. Contact surfaces contribute to friction only as far as there is a pressure difference across the contact surface.

DE 10 2005 035 633 A1 discloses a sealing device according to the preamble of claim 1.

It is therefore an object of the invention to provide a sealing device with low friction. A further object of the invention is to provide a sealing device which provides sealing also when the pressure gradient changes its direction.

### SUMMARY OF THE INVENTION

The invention provides a sealing device comprising a sealing ring for being accommodated in a groove of the first machine part, the sealing ring having a sealing surface for sealingly contacting the second machine part when the sealing ring is accommodated in the groove of the first machine part, where the sealing ring has an annular groove in the sealing surface with sealing surface portions on respective sides of the annular groove, and a first side and a second side opposite the first side, each of the first and second sides extending transversely to the sealing surface, and one or more bores establishing fluid communication between the first side and the annular groove in the sealing surface. The fluid communication established by the bore equalises the pressure at the first side and in the annular groove whereby the sealing surface portion between the first side and the annular groove has no or little friction against the second machine part while the mechanical stability of the sealing device is maintained.

The sealing device further has one or more bores establishing fluid communication between the second side and the annular groove in the sealing surface, and a resilient ring such as an O-ring accommodated in the annular groove in the sealing surface. Such a sealing device functions symmetrically and seals against pressure gradients in either direction with the O-ring sealing the annular groove towards the low-pressure side of the sealing device.

### BRIEF DESCRIPTION OF THE DRAWINGS

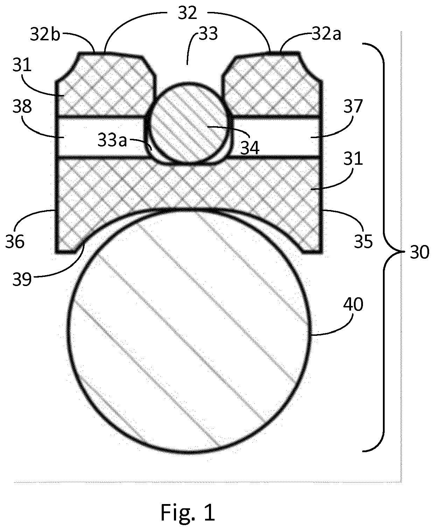

Figure 1 shows a cross section through a sealing device of the invention, and

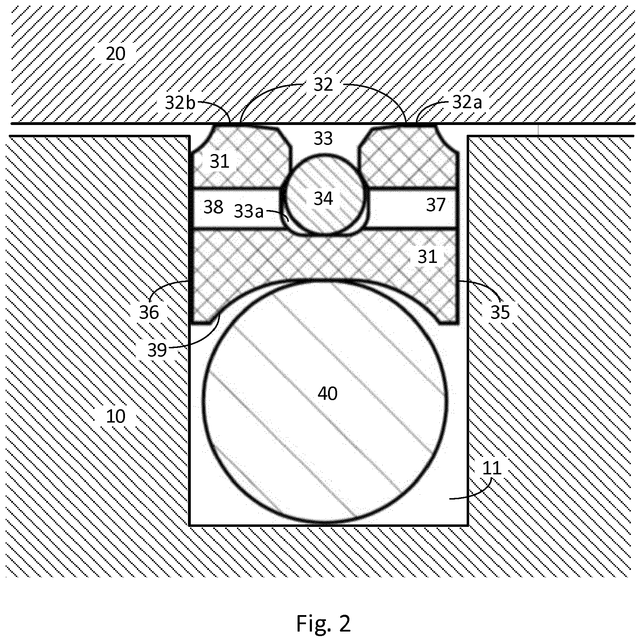

Figure 2 shows a cross section of the sealing device shown in figure 1 used for sealing in two machine parts.

### DETAILED DESCRIPTION OF THE INVENTION

In the figures is shown a first machine part 10 and a second machine part 20 which are movable relative to each other in a linear and/or rotating movement. The first machine part has an annular groove 11 accommodating a sealing device 30 according to the invention. The sealing device comprises a sealing ring 31 of a PTFE based material or other suitable material. The sealing ring 31 has a sealing surface 32 with two sealing surface portions 32a, 32b in sealing contact with the second machine part 20. The sealing ring 31 has an annular groove 33 in the sealing surface between the two sealing surface portions 32a, 32b and an optional resilient ring such as an O-ring 34 accommodated in the groove 33. The O-ring 34 is resilient and has a circular or other suitable cross section. A first side 35 and a second side 36 opposite the first side extend transversely to the sealing surface 32. A first bore 37 establishes fluid communication between the first side 35 and the annular groove 33, and an optional second bore 38 establishes fluid communication between the second side 36 and the annular groove 33. The first and second bores 37, 38 can be in alignment with each other as shown, or they can out of alignment with each other, e.g. offset in the peripheral and/or radial directions relative to each other. A preferably resilient stressing ring 40 is arranged in contact with a surface 39 of the sealing ring 31 opposite the sealing surface 32 and with the bottom of the groove 11. The surface 39 is preferably concave whereby the stressing ring 40 is retained in the sealing ring 31.

A sealing ring 31 with one or more first bores 37 establishing fluid communication between the first side 35 and the annular groove 33, but without a second bore 38, and thus without fluid communication between the second side 36 and the annular groove 33, and possibly also without the O-ring 34, functions together with the stressing ring 40 as a seal between a high fluid pressure on the first side 35 and the second side 36 of the sealing device 30. Through the first bore 37 the high fluid pressure will also exist in the annular groove 33, whereby there will be no pressure difference between the two sides of the first sealing portion 32a and therefore no or little friction at the first sealing portion 32a. The fluid pressure will act on the stressing ring 40 which will force the sealing ring towards the second machine part 20, whereby the second sealing portion 32b will establish sealing contact with the second machine part 20 and the second side 36 of the sealing ring 31 is forced against the corresponding side of the groove 11. Since also the first sealing portion 32a is in contact with the second machine part 20 the stability of the sealing ring 31 is maintained even at high pressure at the first side 35.

A sealing device as shown and described with one or more first bores 37 establishing fluid communication between the first side 35 and the annular groove 33, and one or more second bores 38 establishing fluid communication between the second side 36 and the annular groove 33 and an O-ring 34 functions as follows. A high fluid pressure on the first side 35 of the sealing ring 31 will, through the one or more first bores 37, exist in the annular groove 33 and force the O-ring 34 against the one or more second bores 38 in sealing contact therewith and the first side 35 of the sealing ring 31 is forced against the corresponding side of the groove 11. Since there is no pressure difference across the first sealing portion 32a, there will be no or little friction at the first sealing portion 32a. The fluid pressure will act on the stressing ring 40 which will force the sealing ring towards the second machine part 20, whereby the second sealing surface portion 32b will establish sealing contact with the second machine part 20.

Preferably, the annular groove 33 has an opening in the sealing surface 32, which is narrower than the thickness of the resilient ring 34, whereby the resilient ring 34 is retained in the annular groove 33. Preferably, the annular groove 33 in the sealing surface 32 also has a bottom portion 33a, which is slightly wider than the thickness of the resilient ring 34, i.e. with a slight clearance improving the function of the resilient ring 34 as a valve member sealing the one or more second bores 38 while a high fluid pressure on the first side 35 of the sealing ring 31 through the one or more first bores 37 acts on the resilient ring 34, and vice versa.

The structure described and shown in the figure is essentially symmetrical and the function described immediately above applies correspondingly when a high fluid pressure on the second side 36 of the sealing ring 31 will, through the one or more second bores 38, exist in the annular groove 33 and force the O-ring 34 against the one or more first bores 37 in sealing contact therewith. Since there is no pressure difference across the second sealing portion 32b, there will be no or little friction at the second sealing portion 32b. The fluid pressure will act on the stressing ring 40 which will force the sealing ring towards the second machine part 20, whereby the first sealing surface portion 32a will establish sealing contact with the second machine part 20.

The sealing device 30 can be symmetric, which may be preferred when the sealing device is used for sealing against pressure differences about the same size with changing direction of the pressure gradient. Or the sealing device 30, and in particular the sealing surface portions, can be asymmetric, which may be preferred when the sealing device is used for sealing against pressure differences of different, or highly different, size with changing direction of the pressure gradient.

The sealing device thus provides a seal against a high fluid pressure on either of the first and second sides 35, 36 and is thus suitable for e.g. hydraulic or pneumatic machinery with reciprocating piston rods.

## Claims

1. A sealing device (30) for sealing between a first machine part (10) and a second machine (20) part so as to provide a seal between opposite sides of the sealing device (30), the sealing device comprising
a sealing ring (31) for being accommodated in a groove (11) of the first machine part (10), the sealing ring (31) having a sealing surface (32) for sealingly contacting the second machine part (20) when the sealing ring (30) is accommodated in the groove (11) of the first machine part (10), the sealing ring (30) having
an annular groove (33) in the sealing surface (32) with sealing surface portions (32a, 32b) on respective sides of the annular groove (33), and
a first side (35) and a second side (36) opposite the first side (35), each of the first and second sides extending transversely to the sealing surface (32), and
one or more bores (37) establishing fluid communication between the first side (35) and the annular groove (33) in the sealing surface (32),
wherein the sealing device (30) further has
one or more bores (38) establishing fluid communication between the second side (36) and the annular groove (33) in the sealing surface (32),
**characterised in that**
a resilient ring (34) is accommodated in the annular groove (33) in the sealing surface (32), and
wherein, when a high pressure exists on one of the first and second sides (35, 36) higher than a low pressure on the other of the first and second sides, the resilient ring (34) seals the one or more bores (38) at the other of the first and second sides.

2. A sealing device (30) according to claim 1 wherein the one or more bores (37) establishing fluid communication between the first side (35) and the annular groove (33) are offset in the peripheral direction relative to the one or more bores (38) establishing fluid communication between the second side (36) and the annular groove (33).

3. A sealing device (30) according to claim 1 wherein one or more of the bores (37) establishing fluid communication between the first side (35) and the annular groove (33) are aligned with one or more of the bores (38) establishing fluid communication between the second side (36) and the annular groove (33).

4. A sealing device (30) according to any one of the preceding claims wherein the annular groove (33) has an opening in the sealing surface (32), which is narrower than the thickness of the resilient ring (34).

5. A sealing device (30) according to claim 4 wherein the annular groove (33) in the sealing surface (32) has a bottom portion (33a), which is wider than the thickness of the resilient ring (34).

6. A sealing device (30) according to any one of the preceding claims further comprising a resilient stressing ring (40) on a side of the sealing ring opposite the sealing surface (32).

7. A sealing device (30) according to claim 6 wherein the side (39) of the sealing ring opposite the sealing surface (32) is concave.

8. A sealing device (30) according to any one of the preceding claims wherein the sealing surface portions (32a, 32b) are symmetric.

9. A sealing device (30) according to any one claims 1-7 wherein the sealing surface portions (32a, 32b) are asymmetric.

## Patentansprüche

1. Dichtungsvorrichtung (30) zum Abdichten zwischen einem ersten Maschinenteil (10) und einem zweiten Maschinenteil (20), um so eine Abdichtung zwischen gegenüberliegenden Seiten der Dichtungsvorrichtung (30) bereitzustellen, wobei die Dichtungsvorrichtung Folgendes umfasst:
einen Dichtungsring (31) zum Untergebrachtwerden in einer Vertiefung (11) des ersten Maschinenteils (10), wobei der Dichtungsring (31) eine Dichtungsfläche (32) zum abdichtenden Kontaktieren des zweiten Maschinenteils (20) aufweist, wenn der Dichtungsring (30) in der Vertiefung (11) des ersten Maschinenteils (10) untergebracht ist, wobei der Dichtungsring (30) Folgendes aufweist:
eine ringförmige Vertiefung (33) in der Dichtungsfläche (32) mit Dichtungsflächenabschnitten (32a, 32b) an entsprechenden Seiten der ringförmigen Vertiefung (33), und
eine erste Seite (35) und eine zweite Seite (36) gegenüber der ersten Seite (35), wobei jede der ersten und der zweiten Seite quer zu der Dichtungsfläche (32) verläuft, und
eine oder mehrere Bohrungen (37), die Fluidkommunikation zwischen der ersten Seite (35) und der ringförmigen Vertiefung (33) in der Dichtungsfläche (32) herstellen,
wobei die Dichtungsvorrichtung (30) ferner Folgendes aufweist:
eine oder mehrere Bohrungen (38), die Fluidkommunikation zwischen der zweiten Seite (36) und der ringförmigen Vertiefung (33) in der Dichtungsfläche (32) herstellen, **dadurch gekennzeichnet, dass**
ein elastischer Ring (34) in der ringförmigen Vertiefung (33) in der Dichtungsfläche (32) untergebracht ist, und
wobei, wenn ein hoher Druck an einer der ersten und der zweiten Seite (35, 36) besteht, der höher als ein Niederdruck an der anderen der ersten und der zweiten Seite ist, der elastische Ring (34) die eine oder die mehreren Bohrungen (38) an der anderen der ersten und der zweiten Seite abdichtet.

2. Dichtungsvorrichtung (30) nach Anspruch 1, wobei die eine oder die mehreren Bohrungen (37), die Fluidkommunikation zwischen der ersten Seite (35) und der ringförmigen Vertiefung (33) herstellen, in der Umfangsrichtung relativ zu der einen oder den mehreren Bohrungen (38), die Fluidkommunikation zwischen der zweiten Seite (36) und der ringförmigen Vertiefung (33) herstellen, versetzt sind.

3. Dichtungsvorrichtung (30) nach Anspruch 1, wobei eine oder mehrere der Bohrungen (37), die Fluidkommunikation zwischen der ersten Seite (35) und der ringförmigen Vertiefung (33) herstellen, mit einer oder mehreren der Bohrungen (38), die Fluidkommunikation zwischen der zweiten Seite (36) und der ringförmigen Vertiefung (33) herstellen, ausgerichtet sind.

4. Dichtungsvorrichtung (30) nach einem der vorhergehenden Ansprüche, wobei die ringförmige Vertiefung (33) eine Öffnung in der Dichtungsfläche (32) aufweist, die schmaler als die Dicke des elastischen Rings (34) ist.

5. Dichtungsvorrichtung (30) nach Anspruch 4, wobei die ringförmige Vertiefung (33) in der Dichtungsfläche (32) einen unteren Abschnitt (33a) aufweist, der breiter als die Dicke des elastischen Rings (34) ist.

6. Dichtungsvorrichtung (30) nach einem der vorhergehenden Ansprüche, ferner umfassend einen elastischen Spannring (40) an einer Seite des Dichtungsrings gegenüber der Dichtungsfläche (32).

7. Dichtungsvorrichtung (30) nach Anspruch 6, wobei die Seite (39) des Dichtungsrings gegenüber der Dichtungsfläche (32) konkav ist.

8. Dichtungsvorrichtung (30) nach einem der vorhergehenden Ansprüche, wobei die Dichtungsflächenabschnitte (32a, 32b) symmetrisch sind.

9. Dichtungsvorrichtung (30) nach einem der Ansprüche 1-7, wobei die Dichtungsflächenabschnitte (32a, 32b) asymmetrisch sind.

## Revendications

1. Dispositif de scellement (30) destiné à se sceller entre une première pièce de machine (10) et une seconde pièce de machine (20) de façon à assurer un joint entre des côtés opposés du dispositif de scellement (30), le dispositif de scellement comprenant
une bague de scellement (31) destinée à s'adapter dans une rainure (11) de la première pièce de machine (10), la bague de scellement (31) possédant une surface de scellement (32) pour être en contact de manière scellée avec la seconde pièce de machine (20) lorsque la bague de scellement (30) est adaptée dans la rainure (11) de la première pièce de machine (10), la bague de scellement (30) comportant
une rainure annulaire (33) dans la surface de scellement (32) avec des portions de surface de scellement (32a, 32b) sur des côtés respectifs de la rainure annulaire (33), et
un premier côté (35) et un second côté (36) opposé au premier côté (35), chacun des premier et second côtés s'étendant transversalement jusqu'à la surface de scellement (32), et
un ou plusieurs alésages (37) établissant une communication fluidique entre le premier côté (35) et la rainure annulaire (33) dans la surface de scellement (32),
ledit dispositif de scellement (30) comportant en outre
un ou plusieurs alésages (38) établissant une communication fluidique entre le second côté (36) et la rainure annulaire (33) dans la surface de scellement (32),
**caractérisé en ce que**
une bague résiliente (34) est adaptée dans la rainure annulaire (33) dans la surface de scellement (32), et
dans lequel, lorsqu'une haute pression existe sur l'un des premier et second côtés (35, 36) supérieure à une faible pression sur l'autre des premier et second côtés, la bague résiliente (34) scelle lesdits un ou plusieurs alésages (38) au niveau de l'autre des premier et second côtés.

2. Dispositif de scellement (30) selon la revendication 1 dans lequel un ou plusieurs alésages (37) établissant une communication fluidique entre le premier côté (35) et la rainure annulaire (33) sont décalés dans la direction périphérique par rapport auxdits un ou plusieurs alésages (38) établissant une communication fluidique entre le second côté (36) et la rainure annulaire (33).

3. Dispositif de scellement (30) selon la revendication 1 dans lequel un ou plusieurs des alésages (37) établissant une communication fluidique entre le premier côté (35) et la rainure annulaire (33) sont alignés avec un ou plusieurs des alésages (38) établissant une communication fluidique entre le second côté (36) et la rainure annulaire (33).

4. Dispositif de scellement (30) selon l'une quelconque des revendications précédentes dans lequel la rainure annulaire (33) comporte une ouverture dans la surface de scellement (32), qui est plus étroite que l'épaisseur de la bague résiliente (34).

5. Dispositif de scellement (30) selon la revendication 4 dans lequel la rainure annulaire (33) dans la surface de scellement (32) possède une partie inférieure (33a), qui est plus large que l'épaisseur de la bague résiliente (34).

6. Dispositif de scellement (30) selon l'une quelconque des revendications précédentes comprenant en outre une bague de contrainte résiliente (40) sur un côté de la bague de scellement opposé à la surface de scellement (32).

7. Dispositif de scellement (30) selon la revendication 6 dans lequel le côté (39) de la bague de scellement opposé à la surface de scellement (32) est concave.

8. Dispositif de scellement (30) selon l'une quelconque des revendications précédentes dans lequel les portions de surface de scellement (32a, 32b) sont symétriques.

9. Dispositif de scellement (30) selon l'une quelconque des revendications 1 à 7 dans lequel les portions de surface de scellement (32a, 32b) sont asymétriques.
